# EUROPÄISCHE PATENTANMELDUNG

(11) **EP 0 684 503 A1**
(43) Veröffentlichungstag der Anmeldung: **29.11.1995**
(21) Anmeldenummer: 95101433.1
(22) Anmeldetag: 02.02.1995
(51) Int. Cl.: G03B 21/64

(54) **Diapositiv-Rähmchen und Verfahren zu seiner Herstellung**

(30) Priorität: 26.05.1994 DE 4418423; 27.06.1994 DE 4422378
(71) Anmelder: GEIMUPLAST PETER MUNDT GmbH & Co. KG, D-82453 Garmisch-Partenkirchen (DE)
(72) Erfinder: Pohl, Claus, D-82438 Eschenlohe (DE)
(74) Vertreter: Zinnecker, Armin, Dipl.-Ing.

(57) **Zusammenfassung**

Ein Diapositiv-Rähmchen besteht aus zwei miteinander verbundenen Hälften. Um ein derartiges Diapositiv-Rähmchen zu verbessern, besteht eine Hälfte (2) aus Kunststoff und die andere Hälfte (1) aus Pappe.

## Beschreibung

Die Erfindung betrifft ein Diapositiv-Rähmchen und ein Verfahren zur Herstellung eines Diapositiv-Rähmchens.

Diapositiv-Rähmchen, die aus zwei miteinander verbundenen Hälften bestehen, sind bereits bekannt. Sie wurden ursprünglich aus Pappe (kann auch als "Karton" bezeichnet werden) hergestellt. Um die beiden Hälften des Diapositiv-Rähmchens, also die Oberseite und die Unterseite, miteinander zu verbinden und dadurch das Diapositiv innerhalb des Rähmchens festzuklemmen, wurde die Pappe beschichtet und anschließend heißversiegelt. Zunächst wurde also der Film eingelegt, und anschließend wurden die Hälften des Rähmchens aufeinandergelegt und in dieser Form heißversiegelt, um die beiden Hälften des Diapositiv-Rähmchens miteinander zu verbinden und das Diapositiv darin zu fixieren.

Das Diapositiv-Rähmchen konnte aus einem Stück gefertigt sein. Es wurde dann etwa in der Mitte um 180_{°} verschwenkt, also "zugeklappt". Statt dessen konnte es auch aus zwei gesondert gefertigten Teilen bestehen, die - nach dem Einlegen des Diapositivs - aufeinander gelegt und miteinander verbunden wurden, so daß ein Teil die obere Hälfte und das andere Teil die untere Hälfte bildete.

Der wesentliche Vorteil des Diapositiv-Rähmchens aus Pappe bestand darin, daß es verhältnismäßig kostengünstig war. Weiterhin war es einfach zu bedrucken und/oder zu beschriften.

Dem stand jedoch der Nachteil gegenüber, daß durch den Stanzvorgang Fusseln in das Bildfenster gelangen konnten, so daß die Projektion des Bildes nicht einwandfrei war. Die Form des Diapositiv-Rähmchens wurde aus dem Pappdeckelmaterial ausgestanzt, und zwar sowohl die Außenkontur als auch die Innenkontur, also das Bildfenster. Besonders störend waren dabei die Fusseln, die bei der Stanzung der Innenkante, also bei der Stanzung des Bildfensters, entstanden, da diese eine einwandfreie Projektion verhindert haben.

Da das Pappdeckel-Material verhältnismäßig dünn ist, waren auch die daraus hergestellten Diapositiv-Rähmchen verhältnismäßig dünn. Dies brachte eine ungenügende Steifigkeit und eine ungenügende Formhaltigkeit mit sich. Bei der Verwendung in Projektionsautomaten trat ein Verschleiß auf, der das Diapositiv-Rähmchen mit der Zeit unansehnlich und auch nicht mehr brauchbar machte. Auch die Planheit der Pappe stellte ein Problem dar, da Pappe nicht die erforderliche Steifigkeit und Formhaltigkeit aufweist.

Ein weiterer Nachteil bestand darin, daß der Rahmungsvorgang bei einem Diapositiv-Rähmchen aus Pappe sehr aufwendig, technisch anspruchsvoll und - insbesondere durch die Heißversiegelung - verhältnismäßig langsam ist. Von Nachteil ist schließlich noch, daß das Diapositiv-Rähmchen zerstört werden muß, wenn das Diapositiv entnommen werden soll.

Wegen dieser Nachteile werden Diapositiv-Rähmchen seit einiger Zeit nicht mehr aus Pappe, sondern aus Kunststoff hergestellt. Diapositiv-Rähmchen aus Kunststoff sind sehr maßhaltig, formhaltig und stabil. Sie können einwandfrei verarbeitet werden.

Ferner ist man bei der Formgebung sehr flexibel. Es können nahezu beliebige Formen für die Hälften des Diapositiv-Rähmchens gewählt werden, da die entsprechende Spritzform (also das entsprechende "Spritzwerkzeug") je nach Bedarf hergestellt werden kann. Beispielsweise können an den Ecken Abrundungen vorgesehen werden. Im Inneren des Diapositiv-Rähmchens können Führungsrippen, Klemmen und Klemmelemente angeordnet werden. Hierdurch kann eine höhere Planheit bzw. Planlage des Films erreicht werden.

Ein weiterer wesentlicher Vorteil besteht darin, daß Diapositiv-Rähmchen aus Kunststoff mit hoher Geschwindigkeit automatisch gerahmt werden können, da die Diapositiv-Rähmchen einteilig konstruiert und hergestellt werden können und mittels einer Biegeaufweitung mit Diapositiv-Filmen versehen werden können. Die Biegeaufweitung ist möglich, weil der Kunststoff verhältnismäßig elastisch ist. Die Elastizität von Pappdeckeln reicht demgegenüber nicht aus, um ein Diapositiv-Rähmchen so weit aufweiten zu können, daß auch ein Diapositiv-Film eingebracht werden kann. Dementsprechend sind mit Diapositiv-Rähmchen aus Pappe nur wesentlich geringere Rahmungsgeschwindigkeiten erreichbar.

Aus Kunststoff kann ferner ein Wechsel-Diapositiv-Rähmchen hergestellt werden, also ein Diapositiv-Rähmchen, das ohne Zerstörung mit einem neuen Diapositiv-Film gefüllt werden kann.

Allerdings sind Diapositiv-Rähmchen aus Kunststoff verhältnismäßig teuer. Sie sind ferner unter Umweltschutzgesichtspunkten von Nachteil.

Aufgabe der Erfindung ist es, ein Diapositiv-Rähmchen zu schaffen, das die Vorteile eines Diapositiv-Rähmchens aus Kunststoff aufweist, das aber kostengünstiger ist.

Erfindungsgemäß wird diese Aufgabe bei einem Diapositiv-Rähmchen, bestehend aus zwei miteinander verbundenen Hälften, dadurch gelöst, daß eine Hälfte aus Kunststoff besteht und die andere Hälfte aus Pappe. Durch diese Ausgestaltung werden sowohl die Vorteile eines Kunststoff-Rähmchens erreicht als auch die Vorteile eines Rähmchens aus Pappe.

Durch die Erfindung wird der Vorteil erreicht, daß nur noch eine Hälfte des Diapositiv-Rähmchens aus Kunststoff sein muß, während die andere Hälfte durch kostengünstigeres und umweltfreundlicheres Pappdeckel-Material ersetzt werden kann, so daß ein insgesamt billigeres und umweltfreundlicheres Diapositiv-Rähmchen entsteht.

Vorteilhafte Weiterbildungen sind in den Unteransprüchen beschrieben.

Die beiden Hälften des Diapositiv-Rähmchens können durch eine Ultraschallschweißung oder durch Kleben miteinander verbunden sein.

Die aus Kunststoff bestehende Hälfte kann eine Umrandung aufweisen. Hierdurch erhöht sich die Stabilität der aus Kunststoff bestehenden Hälfte und damit die Stabilität des gesamten Diapositiv-Rähmchens. Die Stabilitätserhöhung wird durch das vergrößerte Biegemoment erzeugt.

Nach einer weiteren vorteilhaften Weiterbildung weist die aus Kunststoff bestehende Hälfte des Diapositiv-Rähmchens eine Materialverdünnung auf, die als Knickkerbe ausgestaltet sein kann. Hierdurch kann der Rahmungsvorgang verbessert werden. Beim Rahmungsvorgang muß nämlich dafür gesorgt werden, daß die aus Pappe betehende Hälfte plan bleibt, also nicht verbogen wird, da andernfalls die Gefahr besteht, daß die aus Pappe bestehende Hälfte abknickt, so daß der Diapositiv-Film nicht mehr zuverlässig festgehalten werden würde und das Diapositiv damit unbrauchbar wäre. Wenn der Diapositiv-Film durch eine Aufweitung des Diapositiv-Rähmchens eingebracht werden soll, was im Hinblick auf die damit erreichbare hohe Rahmungsgeschwindigkeit wünschenswert ist, darf nur die aus Kunststoff bestehende Hälfte verformt werden. Um dies zu ermöglichen, kann es wünschenswert oder erforderlich sein, die aus Kunststoff bestehende Hälfte an einer oder mehreren günstigen Stellen zu schwächen, um die erforderliche Aufweitung zu erreichen. Hierzu dient die Materialverdünnung. Diese kann in der aus Kunststoff bestehenden Hälfte selbst oder auch in der Umrandung vorgesehen sein.

Sie kann ferner nur auf einer Seite des Bildfensters oder auch auf zwei gegenüberliegenden Seiten des Bildfensters vorgesehen sein. Für die Durchführung des Rahmungsvorgangs kann das Diapositiv-Rähmchen nur einseitig aufgeweitet werden, also nur auf derjenigen Seite, auf der der Film zugeführt wird. Es ist aber auch möglich, das Diapositiv-Rähmchen darüber hinaus auch noch auf der anderen Seite aufzuweiten, also auf derjenigen Seite des Bildfensters, die derjenigen Seite gegenüberliegt, auf der der Diapositiv-Film zugeführt wird. Je nachdem kann es wünschenswert oder erforderlich sein, eine Materialverdünnung bzw. Knickkerbe nur auf der Zuführseite des Diapositiv-Rähmchens vorzusehen oder auch zusätzlich noch auf der gegenüberliegenden Seite. Besonders vorteilhaft ist es, wenn die Materialverdünnung bzw. die Materialverdünnungen in der Umrandung der aus Kunststoff bestehenden Hälfte vorgesehen sind.

Eine weitere vorteilhafte Weiterbildung ist dadurch gekennzeichnet, daß die aus Pappe bestehende Hälfte des Diapositiv-Rähmchens kleiner ist als die aus Kunststoff bestehende Hälfte. Diese Ausgestaltung ist insbesondere dann von Vorteil, wenn die aus Kunststoff bestehende Hälfte eine Umrandung aufweist. Vorzugsweise ist die Anordnung derart getroffen, daß die Außenkontur der aus Pappe bestehenden Hälfte vollständig innerhalb der Außenkontur der aus Kunststoff bestehenden Hälfte liegt bzw. vollständig innerhalb der Umrandung der aus Kunststoff bestehenden Hälfte. Auf diese Weise ist sichergestellt, daß das Diapositiv-Rähmchen ausschließlich auf dem Rand der aus Kunststoff bestehenden Hälfte aufliegt, wenn das Diapositiv-Rähmchen senkrecht bzw. hochkant steht, was insbesondere üblicherweise in einem Projektor der Fall ist. Hierdurch wird sichergestellt, daß nur der Kunststoff aufliegt, der eine höhere Stabilität aufweist, nicht aber die Pappe, die durch häufiges Aufliegen beschädigt werden könnte oder ausfransen könnte.

Ein weiterer Vorteil dieser Ausgestaltung ergibt sich durch die bessere Maßhaltigkeit des Kunststoffes. Bei der Projektion soll der Abstand zwischen der Bildfläche des Diapositiv-Rähmchens und der Außenkante des Diapositiv-Rähmchens möglichst genau eingehalten werden, um eine richtige Projektion des Bildes zu erreichen. Dies ist insbesondere bei der sogenannten AV-Projektion von besonderer Bedeutung. Die AV-Projektoren setzen voraus, daß die Lage des Films innerhalb des Diapositiv-Rähmchens genau eingehalten wird. Die Kante des Bildes muß dementsprechend einen genauen Abstand zur Kante des Diapositiv-Rähmchens einhalten, wenn das Bild richtig projiziert werden soll. Dieser Abstand kann besser eingehalten werden, wenn das Diapositiv-Rähmchen in der senkrechten Stellung ausschließlich auf der Kante der aus Kunststoff bestehenden Hälfte aufliegt, da Kunststoff wesentlich maßhaltiger ist als Pappe.

Die Umrandung der aus Kunststoff bestehenden Hälfte kann unterbrochen sein. Eine derartige Unterbrechung kann insbesondere für einen Keil, der zum Aufweiten der aus Kunststoff bestehenden Hälfte dient, vorgesehen sein. Durch die Unterbrechung kann einem derartigen Keil der Zutritt für die Aufweitung ermöglicht werden.

Eine weitere vorteilhafte Weiterbildung ist dadurch gekennzeichnet, daß das Bildfenster der aus Pappe bestehenden Hälfte größer ist als das Bildfenster der aus Kunststoff bestehenden Hälfte. Hierdurch wird die Möglichkeit geschaffen, daß das Bildfenster ausschließlich durch die aus Kunststoff bestehende Hälfte bestimmt wird. Da Kunststoff sehr maßhaltig und gut herstellbar ist, kann die Bildfenster-Größe sehr gut eingehalten werden. Das Bildfenster der aus Pappe bestehenden Hälfte kann etwas größer gemacht werden, so daß dieses Bildfenster nicht stört und eventuell sich lösende Fusseln die Projektion ebenfalls nicht stören. Die schlechte Maßhaltigkeit der Pappe wirkt sich bei dieser Ausgestaltung nicht negativ aus. Die aus Pappe bestehende Hälfte wird auf ihre Haltefunktion reduziert.

Nach einer weiteren vorteilhaften Weiterbildung weist die aus Kunststoff bestehende Hälfte eine oder mehrere Verbindungsflächen auf. Diese Verbindungsflächen können auf zwei gegenüberliegenden Seiten des Bildfensters vorgesehen sein. Sie können rechteckig ausgestaltet sein, um den Platz zwischen der Außenkante und dem Bildfenster gut auszunutzen. Ferner können die Verbindungsflächen höher sein als die übrigen Teile der aus Kunststoff bestehenden Hälfte.

Vorzugsweise weist die aus Kunststoff bestehende Hälfte mindestens eine Führungsrippe auf. Vorteilhaft ist es, wenn zwei Führungsrippen auf gegenüberliegenden Seiten des Bildfensters vorgesehen sind. Die Führungsrippen dienen zum Einführen und Fixieren des Diapositiv-Films. Sie bilden zwischen sich ein Bett bzw. eine Vertiefung für den Film. Vorzugsweise weisen die Führungsrippen an ihren Enden Einführschrägen auf, die auf den einzuführenden Film eine Trichterwirkung ausüben und das Einführen erleichtern. Die Einführschrägen sind vorzugsweise auf beiden Seiten der Führungsrippen vorgesehen, so daß der Diapositiv-Film unabhängig von der Orientierung des Diapositiv-Rähmchens zuverlässig eingeführt werden kann. Das Diapositiv-Rähmchen kann also um 180 gedreht werden, ohne daß es auf die Orientierung insoweit nicht ankommt.

Bei einem Verfahren zur Herstellung eines Diapositiv-Rähmchens nach einem der vorhergehenden Ansprüche wird die eingangs angegebene Aufgabe dadurch gelöst, daß die Hälften des Diapositiv-Rähmchens durch eine Ultraschallschweißung oder Kleben miteinander verbunden werden. Wie bereits ausgeführt, hat sich überraschend gezeigt, daß eine Beschichtung des Pappdeckels mit Kunststoff nicht erforderlich ist. Überraschenderweise kann auch ein unbeschichteter Pappdeckel ultraverschweißt werden. Es ist auch nicht erforderlich, Klebstoff zu verwenden oder andere Maßnahmen zu ergreifen.

Die Erfindung betrifft ferner ein Verfahren zum Rahmen eines erfindungsgemäßen Diapositiv-Rähmchens. Erfindungsgemäß ist ein derartiges Verfahren dadurch gekennzeichnet, daß die aus Kunststoff bestehende Hälfte des Diapositiv-Rähmchens aufgeweitet wird und daß die aus Pappe bestehende Hälfte des Diapositiv-Rähmchens nicht oder nur innerhalb der Elastizitätsgrenzen aufgeweitet wird.

Eine vorteilhafte Weiterbildung ist dadurch gekennzeichnet, daß die aus Kunststoff bestehende Hälfte des Diapositiv-Rähmchens beidseitig aufgeweitet wird. Diese Hälfte wird also sowohl auf der Zuführseite des Diapositiv-Films als auch auf der gegenüberliegenden Seite aufgeweitet.

Ein Ausführungsbeispiel der Erfindung wird nachstehend anhand der beigefügten Zeichnung im einzelnen erläutert. In der Zeichnung zeigt
Fig. 1 ein Diapositiv-Rähmchen mit einer Hälfte aus Kunststoff und einer Hälfte aus Pappe in einer Ansicht von oben,
Fig. 2 das in Fig. 1 dargestellte Diapositiv-Rähmchen in einer Ansicht von der Seite,
Fig. 3 das Diapositiv-Rähmchen in einer weiteren, vergrößerten Seitenansicht und
Fig. 4 einen Schnitt längs der Linie IV-IV in Fig. 1.

Das in den Zeichnungsfig. dargestellte Diapositiv-Rähmchen besteht aus zwei miteinander verbundenen Hälften, wobei eine Hälfte 2 aus Kunststoff besteht und die andere Hälfte 1 aus Pappe. Die aus Pappe bestehende Hälfte 1 ist vollkommen eben. Sie ist an ihren Ecken mit Abrundungen 3 versehen. Das Bildfenster 4 der aus Pappe bestehenden Hälfte 1 ist größer als das Bildfenster 5 der aus Kunststoff bestehenden Hälfte 2. Die beiden Hälften 1, 2 sind durch eine Ultraschallschweißung oder Kleben miteinander verbunden.

Die aus Kunststoff bestehende Hälfte 2 weist eine Umrandung 6 auf, die senkrecht von der Ebene der beiden Hälften 1, 2 absteht und die die aus Pappe bestehende Hälfte 1 einfaßt. Die äußere Endfläche 7 der Umrandung 6 fluchtet mit der äußeren Endfläche 8 der aus Pappe bestehenden Hälfte 1. Zwischen der Außenkante der aus Pappe bestehenden Hälfte 1 und der Innenkante der Umrandung 6 befindet sich ein umlaufender kleiner Spalt 9. Die Umrandung 6 besitzt an ihren Ecken Rundungen 10.

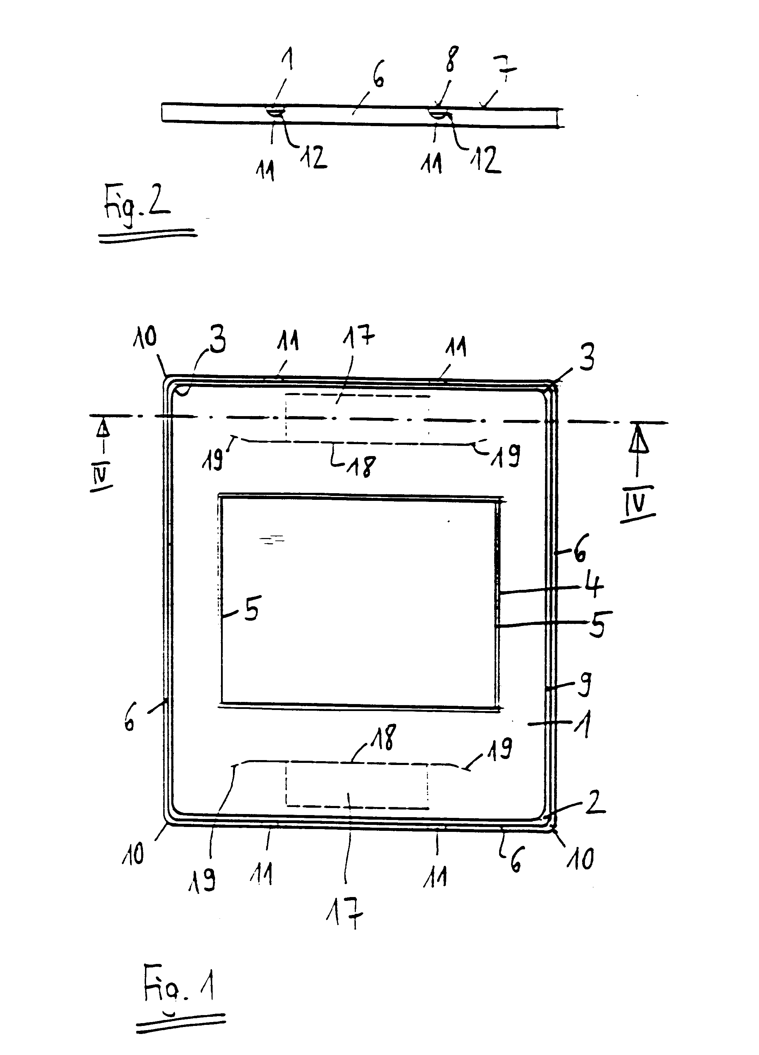

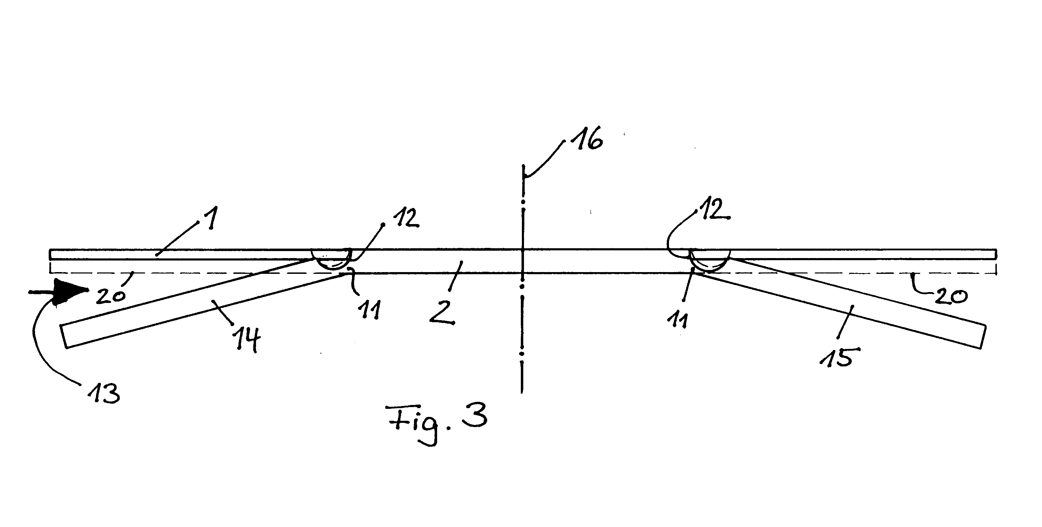

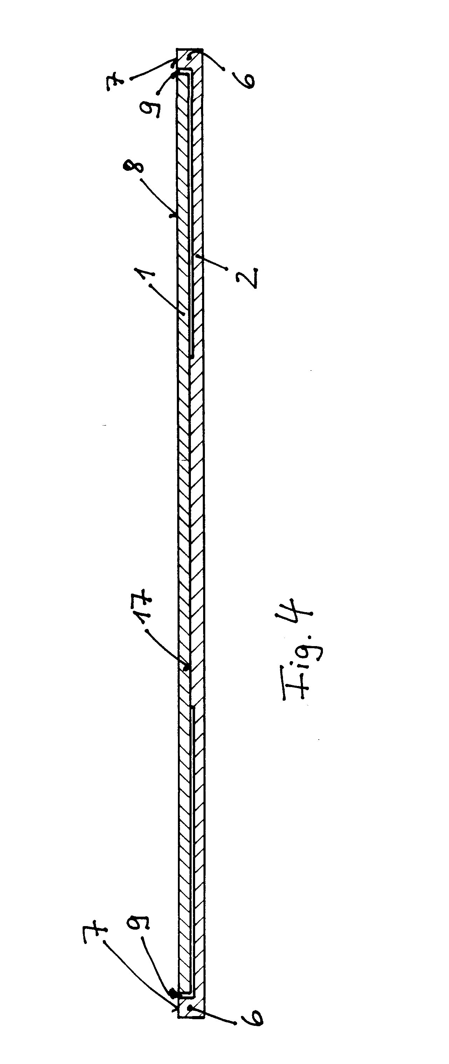

Die Umrandung 6 weist vier Materialverdünnungen 11 auf, die auch als "Knickkerben" bezeichnet werden können. Die Materialverdünnungen 11 werden durch halbkreisförmige Ausnehmungen 12 gebildet. Sie ermöglichen in der aus Fig. 3 ersichtlichen Weise die doppelte Aufweitung der aus Kunststoff bestehenden Hälfte 2. Wenn der Diapositiv-Film beispielsweise in Richtung des Pfeiles 13 eingeführt wird, werden sowohl der auf der Einführseite liegende Teil 14 der aus Kunststoff bestehenden Hälfte 2 als auch deren auf der gegenüberliegenden Seite befindliche Teil 15 aufgeweitet. Da die Teile 14, 15 auf beiden Seiten der aus Kunststoff bestehenden Hälfte 2 aufgeweitet werden, könnte der Diapositiv-Film auch von der gegenüberliegenden Seite, also von der Seite des Teils 15 her, eingeführt werden. Insoweit kommt es auf die Orientierung des Diapositiv-Rähmchens bzw. der aus Kunststoff bestehenden Hälfte 2 nicht an; das Diapositiv-Rähmchen bzw. die aus Kunststoff bestehende Hälfte 2 können insoweit also um 180 um die Hochachse 16 gedreht werden.

In der Umrandung 6 können Unterbrechungen vorhanden sein, die den Eintritt eines Keils zum Aufweiten der Teile 14, 15 ermöglichen. Derartige Unterbrechungen sind in den Zeichnungsfig. allerdings nicht dargestellt.

Wie insbesondere aus den Fig. 1 und 4 ersichtlich, ist die aus Pappe bestehende Hälfte 1 kleiner als die aus Kunststoff bestehende Hälfte 2. Die äußere Umfangslinie der aus Pappe bestehende Hälfte 1 liegt vollständig innerhalb der aus Kunststoff bestehenden Hälfte 2, ja sogar innerhalb der Innenkante der Umrandung 6.

Die aus Kunststoff bestehende Hälfte 2 weist zwei rechteckige Verbindungsflächen 17 auf, die auf gegenüberliegenden Seiten des Bildfensters 5 liegen und die in Fig. 1 gestrichelt gezeichnet sind, da sie durch die aus Pappe bestehende Hälfte 1 verdeckt sind. Die aus Pappe bestehende Hälfte 1 liegt mit ihrer Innenseite auf diesen Verbindungsflächen 17 auf (vgl. insbesondere Fig. 1 und 4). Die Verbindungsflächen 17 liegen etwas höher als die benachbarten Bereiche der aus Kunststoff bestehenden Hälfte 2.

An ihren dem Bildfenster 5 zugewandten Längsseiten werden die Verbindungsflächen 17 von Führungsrippen 18 begrenzt, die parallel zu den längeren Kanten des Bildfensters 5 verlaufen und die über die Verbindungsflächen 17 hinausreichen. An ihren Enden besitzen die Führungsrippen 18 nach außen weisende Einführschrägen 19, die jeweils paarweise eine trichterförmige Einführhilfe für den Diapositiv-Film bilden. Dieser Diapositiv-Film liegt in der Endlage (Projektionslage) in dem zwischen den Führungsrippen 18 gebildeten Filmbett.

Die Hälften 1, 2 können im Bereich der Verbindungsflächen 17 durch eine Ultraschallschweißung miteinander verbunden sein.

Nach dem Einführen des Diapositiv-Films nehmen die Enden 14, 15 des aus Kunststoff bestehenden Teils 2 die in Fig. 3 gestrichelt gezeichnete Endlage 20 ein, in der der Film zwischen den Hälften 1, 2 des Diapositiv-Rähmchens eingeklemmt ist.

## Patentansprüche

1. Diapositiv-Rähmchen, bestehend aus zwei miteinander verbundenen Hälften,
dadurch gekennzeichnet,
daß eine Hälfte (2) aus Kunststoff besteht und die andere Hälfte (1) aus Pappe.

2. Diapositiv-Rähmchen nach Anspruch 1, dadurch gekennzeichnet, daß die beiden Hälften (1, 2) durch eine Ultraschallschweißung oder Kleben miteinander verbunden sind.

3. Diapositiv-Rähmchen nach Anspruch 1 oder 2, dadurch gekennzeichnet, daß die aus Kunststoff bestehende Hälfte (2) eine Umrandung (6) aufweist.

4. Diapositiv-Rähmchen nach einem der vorhergehenden Ansprüche, dadurch gekennzeichnet, daß die aus Kunststoff bestehende Hälfte (2) eine Materialverdünnung (11) aufweist.

5. Diapositiv-Rähmchen nach einem der vorhergehenden Ansprüche, dadurch gekennzeichnet, daß die aus Pappe bestehende Hälfte (1) kleiner ist als die aus Kunststoff bestehende Hälfte (2).

6. Diapositiv-Rähmchen nach einem der Ansprüche 3 bis 5, dadurch gekennzeichnet, daß die Umrandung (6) unterbrochen ist.

7. Diapositiv-Rähmchen nach einem der vorhergehenden Ansprüche, dadurch gekennzeichnet, daß das Bildfenster (4) der aus Pappe bestehenden Hälfte (1) größer ist als das Bildfenster (5) der aus Kunststoff bestehenden Hälfte (2).

8. Diapositiv-Rähmchen nach einem der vorhergehenden Ansprüche, dadurch gekennzeichnet, daß die aus Kunststoff bestehende Hälfte (2) eine oder mehrere Verbindungsflächen (17) aufweist.

9. Diapositiv-Rähmchen nach einem der vorhergehenden Ansprüche, dadurch gekennzeichnet, daß die aus Kunststoff bestehende Hälfte (2) mindestens eine Führungsrippe (18) aufweist.

10. Verfahren zur Herstellung eines Diapositiv-Rähmchens nach einem der vorhergehenden Ansprüche,
dadurch gekennzeichnet,
daß die Hälften (1, 2) des Diapositiv-Rähmchens durch eine Ultraschallschweißung oder Kleben miteinander verbunden werden.

11. Verfahren zum Rahmen eines Diapositiv-Rähmchens nach einem der Ansprüche 1 bis 9,
dadurch gekennzeichnet,
daß die aus Kunststoff bestehende Hälfte (2) aufgeweitet wird und die aus Pappe bestehende Hälfte (1) nicht oder nur innerhalb der Elastizitätsgrenzen aufgeweitet wird.

12. Verfahren nach Anspruch 11, dadurch gekennzeichnet, daß die aus Kunststoff bestehende Hälfte (2) beidseitig aufgeweitet wird.
